# EUROPÄISCHE PATENTSCHRIFT

(11) **EP 4 206 505 B1**
(45) Veröffentlichungstag und Bekanntmachung des Hinweises auf die Patenterteilung: **12.02.2025**
(21) Anmeldenummer: 22214812.4
(22) Anmeldetag: 20.12.2022
(51) Int. Cl.: F16K 15/06, F16K 15/00, F24D 19/08, F24D 19/10

(54) **HEIZGERÄT MIT EINEM SICHERHEITSABLASSVENTIL**
HEATING APPARATUS WITH A SAFETY DRAIN VALVE
APPAREIL DE CHAUFFAGE AVEC SOUPAPE DE DÉCHARGE DE SÉCURITÉ

(30) Priorität: 28.12.2021 TR 202121448
(43) Veröffentlichungstag der Anmeldung: 05.07.2023
(73) Patentinhaber: Bosch Termoteknik Isitma ve Klima Sanayi Ticaret Anonim Sirketi, 45030 Manisa (TR)
(72) Erfinder: Ataman, Bartu, 45030 Manisa (TR); Kuzucanli, Seyit Ahmet, 45030 Manisa (TR)
(74) Vertreter: Bee, Joachim

(56) Entgegenhaltungen:
- EP-A1- 3 636 969
- CN-A- 107 035 902
- DE-U1- 202020 004 564

## Beschreibung

### TECHNISCHES GEBIET

Die Erfindung betrifft ein Heizgerät mit mindestens einem Sicherheitsablassventil, das an eine Zentralheizungsleitung des Heizgeräts angeschlossen ist.

### STAND DER TECHNIK

Kombi-Wasserheizer sind Heizgeräte, die genutzt werden, um den Bedarf an Heizung und Warmwasser zu decken. Der Druckwert des im Kombi-Wasserheizer zirkulierenden Wassers muss innerhalb bestimmter Bereiche bleiben. Aus diesem Grund umfassen Kombi-Wasserheizeranlagen Ventile, die den Wasserdruck unter Kontrolle halten.

Ventile, die den Wasserdruck regulieren, werden als Sicherheitsventile bezeichnet. Diese Ventile stellen sicher, dass das Wasser in der Anlage teilweise abgelassen wird, wenn es über einen bestimmten Wert ansteigt. So sinkt der Druck durch das teilweise abgelassene Wasser. Kombi-Wasserheizer umfassen eine weitere nach außen führende Leitung zum Ablassen des Wassers. Diese Leitung dient zum manuellen Ablassen des Wassers in der Kombi-Wasserheizeranlage für Arbeiten wie Wartung und Instandhaltung. Diese Leitung umfasst ebenfalls ein manuell zu kontrollierendes Ventil.

Die Tatsache, dass sie zwei Ventile und zwei Leitungen für den Wasserablass umfassen, führt dazu, dass Kombi-Wasserheizer mehr Volumen für die Anlage benötigen. Zwei separate Leitungen und zwei separate Ventile erhöhen zudem die Produktionskosten.

EP3 636 969 A1 betrifft ein Rückschlagventil, insbesondere zur Verwendung in einem Heiz- oder Kühlkreislauf. Das Ventil weist ein Ventilgehäuse (2) mit mindestens einem Einlass (3, 3') und mindestens einem Auslass (4, 4') auf, die über einen Kanal (10) miteinander verbunden sind. Zur Steuerung eines Durchflusses durch den Kanal (10) ist ein Ventilelement (7) mit einem Federelement (34) in Abhängigkeit vom Druck des Fluids zwischen einer Offenstellung und einer Schließstellung bewegbar. Ein zusätzliches Entleerungswerkzeug (40) kann in eine Verlängerung des Ventilgehäuses eingesetzt werden, um die Feder zusammenzudrücken und das Wasser manuell in den Abfluss abzulassen.

All die oben genannten Probleme haben eine Innovation in dem betreffenden technischen Gebiet erforderlich gemacht.

### KURZE BESCHREIBUNG DER ERFINDUNG

Die vorliegende Erfindung betrifft ein Heizgerät, um die oben genannten Nachteile zu beseitigen und neue Vorteile auf dem relevanten technischen Gebiet zu schaffen.

Ein Ziel der Erfindung ist es, ein Heizgerät bereitzustellen, bei dem ein Sicherheitsventil und ein Ablassventil in einem einzigen Ventil vereint sind.

Um alle oben erwähnten und sich aus der nachstehenden detaillierten Beschreibung ergebenden Aufgaben zu erfüllen, betrifft die vorliegende Erfindung ein Heizgerät, umfassend mindestens ein an eine Zentralheizungsleitung des Heizgeräts angeschlossenes Sicherheitsablassventil. Die Neuerung besteht darin, dass das Sicherheitsablassventil mindestens ein an die Zentralheizungsleitung angeschlossenes Verbindungsrohr, mindestens ein an das Verbindungsrohr angeschlossenes Ablassrohr, mindestens ein in dem Sicherheitsablassventil angeordnetes Ventilelement umfassend mindestens eine an dem Verbindungsrohr angeordnete Feder zum Schließen des Durchflussweges des Verbindungsrohrs, die mindestens eine erste Wand zu mindestens einer Anlehnwand schiebt, umfasst, wobei die Feder zwischen mindestens einer zweiten Wand und der ersten Wand angeordnet ist, die zweite Wand mit dem Ablassrohr verbunden ist und die zweite Wand und die erste Wand so konfiguriert sind, dass sie sich aufeinander zu oder voneinander weg bewegen. So kann der Flüssigkeitsdurchfluss durch das Sicherheitsablassventil kontrolliert werden.

Das Merkmal einer möglichen Ausführungsform der Erfindung ist, dass das Ventilelement mindestens einen mit der ersten Wand verbundenen Schacht umfasst, der durch mindestens ein an der zweiten Wand vorgesehenes Schachtloch verläuft. Auf diese Weise können sich die erste Wand und die zweite Wand einander so nähern, dass der Flüssigkeitsdurchfluss ermöglicht wird.

Erfindungsgemäß umfasst das Sicherheitsablassventil zwischen dem Ablassrohr und dem Verbindungsrohr mindestens ein Verstellrohr, so dass der Flüssigkeitsdurchfluss manuell kontrolliert werden kann.

Erfindungsgemäß umfasst der Außenumfang des Verstellrohrs mindestens einen Bewegungskanal und mindestens einen teilweise in dem Bewegungskanal angeordneten Bewegungshebel, wobei sich der Bewegungshebel in dem Bewegungskanal bewegt. So kann die Position des Ventilelements durch die Bewegung des Verstellrohrs und des Ablassrohrs relativ zueinander kontrolliert werden.

Erfindungsgemäß weist der Bewegungskanal eine Spiralform auf und der Bewegungshebel ist so konfiguriert, dass er sich zwischen mindestens zwei Enden des Bewegungskanals bewegt. So kann der Durchflussweg geöffnet und geschlossen werden.

Das Merkmal einer weiteren möglichen Ausführungsform der Erfindung ist, dass das Ablassrohr mindestens eine Stopperwand umfasst, die durch eine Feder an die zweite Wand gedrückt wird. Auf diese Weise kann der Durchflussweg der Flüssigkeit zwischen der Ventilaussparung und dem Ablassrohr geschlossen werden.

Das Merkmal einer weiteren möglichen Ausführungsform der Erfindung ist, dass die erste Wand mindestens eine Dichtung umfasst, die der zweiten Wand zugewandt ist. Damit ist sichergestellt, dass der Durchflussweg der Flüssigkeit von dem Verbindungsrohr zur Ventilaussparung hermetisch geschlossen werden kann.

### KURZE BESCHREIBUNG DER FIGUREN

Figur 1 zeigt eine repräsentative perspektivische Ansicht eines Sicherheitsablassventils des erfindungsgemäßen Heizgeräts.
Figur 2 zeigt eine repräsentative vordere Schnittansicht des Sicherheitsablassventils des erfindungsgemäßen Heizgeräts.
Figur 3 zeigt eine repräsentative perspektivische Schnittansicht des Sicherheitsablassventils des erfindungsgemäßen Heizgeräts.
Figur 4 zeigt eine repräsentative perspektivische Ansicht des Ventilelements des erfindungsgemäßen Heizgeräts.

### DETAILLIERTE BESCHREIBUNG DER ERFINDUNG

In dieser ausführlichen Beschreibung wird der Gegenstand der Erfindung nur anhand von Beispielen erläutert, die zum besseren Verständnis des Gegenstandes dienen und keine einschränkende Wirkung haben.

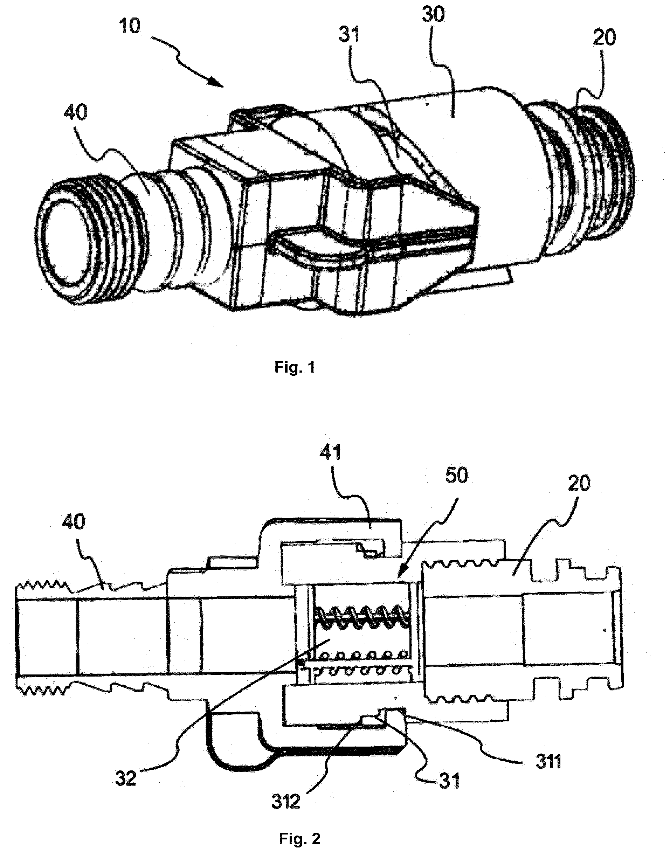

Figur 1 zeigt eine repräsentative perspektivische Ansicht eines Sicherheitsablassventils (10) des erfindungsgemäßen Heizgeräts. Bei dem Heizgerät handelt es sich im Wesentlichen um einen Kombi-Wasserheizer mit einer Zentralheizungsleitung. Die Zentralheizungsleitung ist die Leitung, in der die Flüssigkeit zirkuliert. Die besagte Flüssigkeit ist Wasser. Das Sicherheitsablassventil (10) ist mit der Zentralheizungsleitung verbunden. Das Sicherheitsablassventil (10) sorgt für das Ablassen der Flüssigkeit in der Zentralheizungsleitung.

Das Sicherheitsablassventil (10) umfasst mindestens ein Verbindungsrohr (20). Das Verbindungsrohr (20) verbindet das Sicherheitsablassventil (10) mit der Zentralheizungsleitung. Dementsprechend ist das Verbindungsrohr (20) der Abschnitt, durch den dem Sicherheitsablassventil (10) Flüssigkeit zugeführt wird. Das Sicherheitsablassventil (10) umfasst mindestens ein Ablassrohr (40). Das Ablassrohr (40) ist der Abschnitt, in dem die Flüssigkeit aus dem Sicherheitsablassventil (10) austritt.

Figur 2 zeigt eine repräsentative vordere Schnittansicht des Sicherheitsablassventils (10) des erfindungsgemäßen Heizgeräts. Demnach umfasst das Sicherheitsablassventil (10) mindestens ein Ventilelement (50). Das Ventilelement (50) kontrolliert den Flüssigkeitsdurchfluss im Sicherheitsablassventil (10).

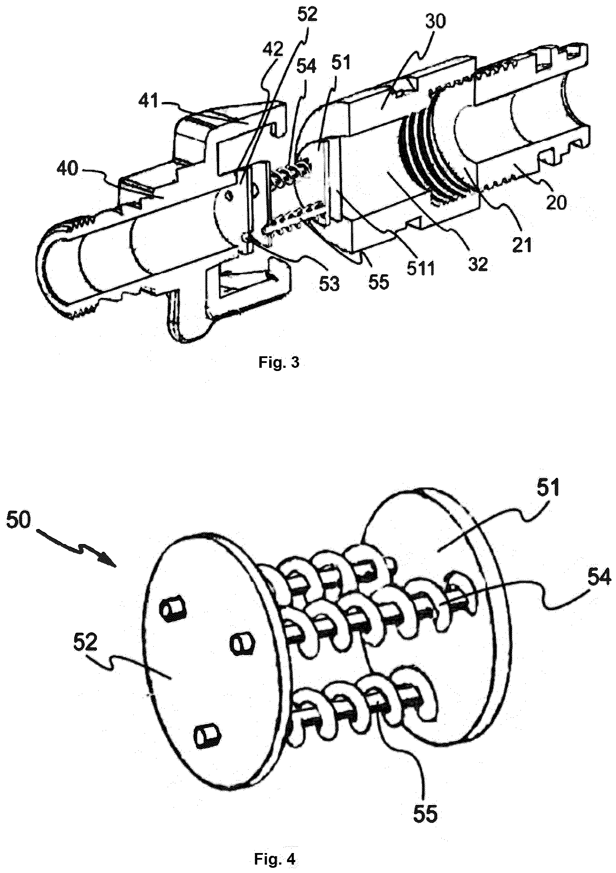

Figur 3 zeigt eine repräsentative perspektivische Schnittsansicht eines Sicherheitsablassventils (10) des erfindungsgemäßen Heizgeräts. Demnach umfasst das Ventilelement (50) mindestens eine erste Wand (51). Die erste Wand (51) befindet sich an dem Abschnitt des Ventilelements (50), der dem Verbindungsrohr (20) zugewandt ist. Der der ersten Wand (51) zugewandte Abschnitt des Verbindungsrohrs (20) umfasst mindestens eine Anlehnwand (21). Mit der Oberfläche der ersten Wand (51), die der Anlehnwand (21) zugewandt ist, ist mindestens eine Dichtung (511) verbunden. Die genannte Dichtung (511) ist ein Dichtungselement. Wenn die erste Wand (51) an der Anlehnwand (21) anliegt, verhindert die Dichtung (511), dass Flüssigkeit aus dem Verbindungsrohr (20) in Richtung des Ventilelements (50) austritt.

Das Ventilelement (50) umfasst mindestens eine zweite Wand (52). Die zweite Wand (52) befindet sich an dem Abschnitt des Ventilelements (50), der dem Ablassrohr (40) zugewandt ist. Der Teil des Ablassrohrs (40), der der zweiten Wand (52) zugewandt ist, umfasst mindestens eine Stopperwand (42). Demnach liegt die zweite Wand (52) in der Position, in der das Ventilelement (50) den Flüssigkeitsdurchfluss stoppt, an der genannten Stopperwand (42) an.

Figur 4 zeigt eine repräsentative perspektivische Ansicht des Ventilelements (50) des erfindungsgemäßen Heizgeräts. Demnach befindet sich zwischen der ersten Wand (51) und der zweiten Wand (52) mindestens ein Schacht (55). Der Schacht (55) führt durch mindestens ein an der zweiten Wand (52) vorgesehenes Schachtloch (53). Um den Schacht (55) herum ist mindestens eine Feder (54) angeordnet. Die genannte Feder (54) ist an einem Ende mit der ersten Wand (51) verbunden. An einem anderen Ende ist die Feder (54) mit der zweiten Wand (52) verbunden. Die Feder (54) drückt die erste Wand (51) zur Anlehnwand (21). So liegen die erste Wand (51) und die Dichtung (511) an der Anlehnwand (21) an. So kann die erste Wand (51) den Durchfluss aus dem Verbindungsrohr (20) stoppen. Die Feder (54) drückt die zweite Wand (52) zur Stopperwand (42).

Wenn die Feder (54) zusammengedrückt wird, bewegt sich der Schacht (55) teilweise durch das Schachtloch (53) zum Ablassrohr (40). So können sich die erste Wand (51) und die zweite Wand (52) durch die Klemmwirkung der Feder (54) einander nähern. Wenn die Feder (54) zusammengedrückt wird, wird die erste Wand (51) von der Anlehnwand (21) getrennt. Dadurch kann die Flüssigkeit von dem Verbindungsrohr (20) zum Ablassrohr (40) fließen. Wenn sich die erste Wand (51) und die zweite Wand (52) einander nähern, kann so die Flüssigkeit von dem Verbindungsrohr (20) in das Ablassrohr (40) gelangen.

Die Feder (54) ist so konfiguriert, dass sie unter einem vorgegebenen kritischen Flüssigkeitsdruckwert nicht zusammengedrückt wird. Die erste Wand (51) bleibt so lange an der Anlehnwand (21) anliegend, bis die erste Wand (51) durch die Flüssigkeit einer größeren Kraft in der dem Federdruck entgegengesetzten Richtung ausgesetzt wird. Somit lässt das Ventilelement (50) bis zu einem bestimmten Druck keinen Flüssigkeitsdurchfluss zu. Dadurch wird sichergestellt, dass die Flüssigkeit unter normalen Betriebsbedingungen des Heizgeräts in der Zentralheizungsleitung bleibt. Wenn der Flüssigkeitsdruck den festgelegten kritischen Druckwert überschreitet, wird die Feder (54) zusammengedrückt. Auf diese Weise wird sichergestellt, dass die Flüssigkeit zum Ablassrohr (40) gelangt und von dort zumindest eine gewisse Menge abgelassen wird. Wenn der Flüssigkeitsdruck in der Zentralheizungsleitung den festgelegten kritischen Wert überschreitet, ist somit zumindest ein gewisser Flüssigkeitsablass gewährleistet. Dadurch wird der Druck in der Zentralheizungsleitung reduziert.

Das Ventilelement (50) befindet sich in mindestens einem Verstellrohr (30). Das Verstellrohr (30) umfasst mindestens eine Ventilaussparung (32). Das Ventilelement (32) ist in der Ventilaussparung (32) positioniert. Mit dem Verstellrohr (30) kann die Feder (54) zusammengedrückt werden. So ermöglicht das Verstellrohr (30) das manuelle Kontrollieren des Ventilelements (50). Das Verstellrohr (30) umfasst mindestens einen Bewegungskanal (31). Der Bewegungskanal (31) befindet sich auf der Oberfläche des Verstellrohrs (30). Der Bewegungskanal (31) ist im Wesentlichen als Ausnehmung an der Außenfläche des Verstellrohrs (30) ausgebildet.

Das Ablassrohr (40) umfasst mindestens einen Bewegungshebel (41). Der Bewegungshebel (41) erstreckt sich vom Ablassrohr (40) zum Verstellrohr (30). Der Bewegungshebel (41) ist mit einem Bewegungskanal (31) verbunden. Der Bewegungskanal (31) ist spiralförmig ausgebildet. Der Bewegungskanal (31) umfasst mindestens ein erstes Ende (311). Das erste Ende (311) ist der Abschnitt der Spiralform, der sich näher am Verbindungsrohr (20) befindet. Der Bewegungskanal (31) umfasst mindestens ein zweites Ende (312). Das zweite Ende (312) ist der Abschnitt der Spiralform, der sich näher am Ablassrohr (40) befindet. Der Bewegungshebel (41) ist in dem Bewegungskanal (31) beweglich. Wenn das Verstellrohr (30) und das Ablassrohr (40) relativ zueinander um die Achse der Ausdehnungsrichtung des Sicherheitsablassventils (10) gedreht werden, ändert der Bewegungshebel (41) seine Position zwischen dem ersten Ende (311) und dem zweiten Ende (312). Diese Drehung kann von einer Person durchgeführt werden.

Demnach drückt die Feder (54) die erste Wand (51) zur Anlehnwand (21), wenn sich der Bewegungshebel (41) in der Nähe des ersten Endes (311) befindet. So verhindert die erste Wand (51), dass die Flüssigkeit von dem Verbindungsrohr (20) zum Ablassrohr (40) gelangt. Wenn sich der Bewegungshebel (41) in der Nähe des zweiten Endes (312) befindet, wird die Feder (54) zusammengedrückt. Dadurch nähern sich die erste Wand (51) und die zweite Wand (52) einander. Dadurch kann die Flüssigkeit von dem Verbindungsrohr (20) in das Ablassrohr (40) gelangen. So kann die Flüssigkeit in der Zentralheizungsleitung mit Hilfe des Sicherheitsablassventils (10) manuell abgelassen werden.

Das Sicherheitsablassventil (10) kann sowohl die Flüssigkeit in der Zentralheizungsleitung, an die das Heizgerät angeschlossen ist, ablassen, wenn der Druck einen bestimmten Druckwert überschreitet, als auch sicherstellen, dass sie manuell von einer Person abgelassen werden kann. Das Sicherheitsablassventil (10) erfüllt somit sowohl die Funktion eines Sicherheitsventils als auch die eines Ablassventils. Auf diese Weise entfällt die Notwendigkeit von zwei separaten Ventilen für das Heizgerät, um die Flüssigkeit abzulassen. Darüber hinaus bietet das Sicherheitsablassventil (10) eine einzige Ablassleitung für das Heizgerät anstelle von zwei separaten Ablassleitungen, die für das Sicherheitsventil und das Ablassventil erforderlich sind. Dadurch wird das Volumen der Ablassleitung im Heizgerät reduziert. Darüber hinaus werden die Produktions- und Wartungskosten gesenkt.

Der Schutzumfang der Erfindung ist in den Ansprüchen angegeben.

### DIE IN DEN FIGUREN ANGEGEBENEN REFERENZNUMMERN

10 Sicherheitsablassventil
20 Verbindungsrohr
21 Anlehnwand
30 Verstellrohr
31 Bewegungskanal
   311 Erstes Ende
   312 Zweites Ende
32 Ventilaussparung
40 Ablassrohr
41 Bewegungshebel
42 Stopperwand
50 Ventilelement
51 Erste Wand
   511 Dichtung
52 Zweite Wand
53 Schachtloch
54 Feder
55 Schacht

## Patentansprüche

1. Heizgerät, umfassend eine Zentralheizungsleitung, in der Flüssigkeit zirkuliert, und mindestens ein an die Zentralheizungsleitung angeschlossenes Sicherheitsablassventil (10), bei dem die Funktion eines Sicherheitsventils als auch die Funktion eines Ablassventils in einem einzigen Ventil vereint sind, wobei das Sicherheitsablassventil (10) mindestens ein an die Zentralheizungsleitung angeschlossenes Verbindungsrohr (20), mindestens ein an das Verbindungsrohr (20) angeschlossenes Ablassrohr (40), mindestens ein zwischen dem Verbindungsrohr (20) und dem Ablassrohr (40) angeordnetes Verstellrohr (30), und mindestens ein in dem
Sicherheitsablassventil (10) angeordnetes Ventilelement (50) umfassend mindestens eine an dem Verbindungsrohr (20) angeordnete Feder (54) zum Schließen des Durchflussweges des Verbindungsrohrs (20), die mindestens eine erste Wand (51) zu mindestens einer Anlehnwand (21) schiebt, umfasst,
wobei die Feder (54) zwischen mindestens einer zweiten Wand (52) und der ersten Wand (51) angeordnet ist, die zweite Wand (52) mit dem Ablassrohr (40) verbunden ist und die zweite Wand (52) und die erste Wand (51) so konfiguriert sind, dass sie sich aufeinander zu oder voneinander weg bewegen,
wobei die Feder (54) so konfiguriert ist, dass sie unter einem vorgegebenen kritischen Flüssigkeitsdruckwert nicht zusammengedrückt wird, die erste Wand an der Anlehnwand anliegt, und keinen Flüssigkeitsdurchfluss zulässt; und wenn der Flüssigkeitsdruck den kritischen Flüssigkeitsdruckwert überschreitet, wird die Feder (54) zusammengedrückt, wobei Flüssigkeit zum Ablassrohr gelangt,
wobei das Ablassrohr (40) mindestens einen Bewegungshebel (41) umfasst, der mindestens teilweise in einem Bewegungskanal (31) auf dem Außenumfang des Verstellrohrs (30) angeordnet ist, der Bewegungskanal (31) eine Spiralform aufweist und der Bewegungshebel (41) so konfiguriert ist, dass er sich zwischen mindestens zwei Enden des Bewegungskanals (31) bewegt,
wobei die Feder so konfiguriert ist, dass sie die erste Wand (51) zur Anlehnwand (21) drückt, wenn sich der Bewegungshebel (41) in der Nähe des ersten Endes (311) befindet, wobei keine Flüssigkeit von dem Verbindungsrohr (20) zum Ablassrohr (40) gelangt; und wobei, wenn sich der Bewegungshebel (41) in der Nähe des zweiten Endes (312) befindet, die Feder (54) zusammengedrückt wird, die erste Wand (51) und die zweite Wand (52) sich einander annähern und Flüssigkeit von dem Verbindungsrohr (20) in das Ablassrohr (40) gelangen kann.

2. Heizgerät nach Anspruch 1, **dadurch gekennzeichnet, dass** das Ventilelement (50) mindestens einen mit der ersten Wand (51) verbundenen Schacht (55) umfasst, der durch mindestens ein an der zweiten Wand (52) vorgesehenes Schachtloch (53) verläuft.

3. Heizgerät nach einem der vorhergehenden Ansprüche, **dadurch gekennzeichnet, dass** das Ablassrohr (40) mindestens eine Stopperwand (42) umfasst, die durch eine Feder (54) zur zweiten Wand (52) gedrückt wird.

4. Heizgerät nach einem der vorhergehenden Ansprüche, **dadurch gekennzeichnet, dass** die erste Wand (51) mindestens eine Dichtung (511) umfasst, die der zweiten Wand (21) zugewandt ist.

## Claims

1. Heater comprising a central-heating line, in which liquid circulates, and at least one safety drain valve (10), which is connected to the central-heating line and with which the function of a safety valve and the function of a drain valve are combined in a single valve, wherein the safety drain valve (10) comprises at least one connecting pipe (20), connected to the central-heating line, at least one drain pipe (40), connected to the connecting pipe (20), at least one adjustment pipe (30), arranged between the connecting pipe (20) and the drain pipe (40), and at least one valve element (50), arranged in the safety drain valve (10), which comprises at least one spring (54) arranged on the connecting pipe (20) for closing the throughflow path of the connecting pipe (20), this pushing at least one first wall (51) to at least one abutment wall (21),
wherein the spring (54) is arranged between at least one second wall (52) and the first wall (51), the second wall (52) is connected to the drain pipe (40), and the second wall (52) and the first wall (51) are configured in such a way as to move towards one another or away from one another,
wherein the spring (54) is configured in such a way that, below a predefined critical liquid-pressure value, it is not compressed, the first wall abuts against the abutment wall and no passage of liquid is permitted; and, if the liquid pressure exceeds the critical liquid-pressure value, the spring (54) is compressed, with liquid passing to the drain pipe,
wherein the drain pipe (40) comprises at least one movement lever (41) which is arranged at least partially in a movement channel (31) on the outer periphery of the adjustment tube (30), the movement channel (31) has the shape of a spiral, and the movement lever (41) is configured in such a way as to move between at least two ends of the movement channel (31), wherein the spring is configured in such a way that it presses the first wall (51) to the abutment wall (21), when the movement lever (41) is in the vicinity of the first end (311), with no fluid passing from the connecting pipe (20) to the drain pipe (40); and wherein, if the movement lever (41) is in the vicinity of the second end (312), the spring (54) is compressed, the first wall (51) and the second wall (52) approach one other and liquid can pass from the connecting pipe (20) into the drain pipe (40).

2. Heater according to Claim 1, **characterized in that** the valve element (50) comprises at least one shaft (55) which is connected to the first wall (51) and which extends through at least one shaft hole (53) provided in the second wall (52).

3. Heater according to either of the preceding claims, **characterized in that** the drain pipe (40) comprises at least one stopper wall (42) which is pressed to the second wall (52) by way of a spring (54).

4. Heater according to one of the preceding claims, **characterized in that** the first wall (51) comprises at least one seal (511) which is directed towards the second wall (21).

## Revendications

1. Appareil de chauffage comprenant un conduit de chauffage central dans lequel circule un liquide et au moins une soupape de décharge (10) de sécurité, raccordée au conduit de chauffage central, la fonction de soupape de sécurité et la fonction de soupape de décharge étant réunies en une seule soupape, la soupape de décharge (10) de sécurité comprenant au moins un tube de raccordement (20) raccordé au conduit de chauffage central, au moins un tube d'évacuation (40) raccordé au tube de raccordement (20), au moins un tube de réglage (30) agencé entre le tube de raccordement (20) et le tube d'évacuation (40), et au moins un élément (50) formant soupape, agencé dans la soupape de décharge (10) de sécurité, comprenant au moins un ressort (54) agencé sur le tube de raccordement (20) pour fermer le trajet d'écoulement du tube de raccordement (20), qui pousse au moins une première paroi (51) vers au moins une paroi d'appui (21),
le ressort (54) étant agencé entre au moins une deuxième paroi (52) et la première paroi (51), la deuxième paroi (52) étant reliée au tube d'évacuation (40), et la deuxième paroi (52) et la première paroi (51) étant configurées de façon à se rapprocher ou à s'éloigner l'une de l'autre,
le ressort (54) étant configuré de façon à ne pas être comprimé en-dessous d'une valeur de pression de liquide critique prédéterminée, la première paroi étant en butée contre la paroi d'appui, et ne permettant pas l'écoulement de liquide ; et lorsque la pression de liquide dépasse la valeur de pression de liquide critique, le ressort (54) est comprimé, le liquide passant dans le tube d'évacuation,
le tube d'évacuation (40) comprenant au moins un levier de déplacement (41) agencé au moins partiellement dans un canal de déplacement (31) sur la circonférence extérieure du tube de réglage (30), le canal de déplacement (31) ayant une forme de spirale, et le levier de déplacement (41) étant configuré de façon à se déplacer entre au moins deux extrémités du canal de déplacement (31), le ressort étant configuré de telle façon qu'il pousse la première paroi (51) vers la paroi d'appui (21) lorsque le levier de déplacement (41) est à proximité de la première extrémité (311), aucun liquide ne passant du tube de connexion (20) au tube d'évacuation (40) ; et, lorsque le levier de déplacement (41) est proche de la deuxième extrémité (312), le ressort (54) est comprimé, la première paroi (51) et la deuxième paroi (52) se rapprochent l'une de l'autre et du liquide est apte à passer du tube de raccordement (20) dans le tube d'évacuation (40).

2. Appareil de chauffage selon la revendication 1, **caractérisé en ce que** l'élément (50) formant soupape comprend au moins un pion (55) relié à la première paroi (51), qui passe par au moins un trou (53) de pion prévu sur la deuxième paroi (52).

3. Appareil de chauffage selon l'une des revendications précédentes, **caractérisé en ce que** le tube d'évacuation (40) comprend au moins une paroi d'arrêt (42) qui est pressée par un ressort (54) vers la deuxième paroi (52).

4. Appareil de chauffage selon l'une des revendications précédentes, **caractérisé en ce que** la première paroi (51) comprend au moins un joint d'étanchéité (511) situé en face de la deuxième paroi (21).
